# EUROPÄISCHE PATENTANMELDUNG

(11) **EP 1 691 136 A1**
(43) Veröffentlichungstag der Anmeldung: **16.08.2006**
(21) Anmeldenummer: 05111309.0
(22) Anmeldetag: 25.11.2005
(51) Int. Cl.: F24C 15/32, A21B 1/26, F16B 21/20

(54) **Hausgerätevorrichtung mit einem Befestigungsteil für ein Gebläserad**

(30) Priorität: 21.01.2005 DE 102005002951
(71) Anmelder: BSH Bosch und Siemens Hausgeräte GmbH, 81739 München (DE)
(72) Erfinder: Seeck, Günther, 75015, Bretten (DE)

(57) **Zusammenfassung**

Die Erfindung geht aus von einer Hausgerätevorrichtung mit einem Befestigungsteil (10) zum Befestigen eines Hausgerätelüfterrads (12) eines Hausgeräts, insbesondere eines Gargeräts (14), an einer Motorwelle (16) eines Antriebsmotors (18).

Um eine gattungsgemäße Hausgerätevorrichtung bereitzustellen, deren Montagefreundlichkeit verbessert ist und die geringe Produktionskosten verursacht, wird vorgeschlagen, dass das Befestigungsteil (10) dazu vorgesehen ist, wenigstens in eine axiale Richtung (26) eine zumindest hauptsächlich kraftschlüssige Verbindung (60) mit der Motorwelle (16) zu erzeugen.

In einer Ausführungsform ist das Befestigungsteil als selbst-klemmende Sperrscheibe ausgebildet, mit einer mittigen, sternförmigen Öffnung (54), die von radial nach innen ragenden Laschen (56) begrenzt ist. Deren freie Enden bilden einen Kreis, dessen Innendurchmesser um etwa 1-2 mm kleiner ist als der Wellendurchmesser. Beim Aufpressen des Befestigungsteils auf die Welle werden die Laschen (56) nach hinten ausgelenkt und liegen anschließend mit einer Klemmkraft an der Seitenfläche der Welle an.

## Beschreibung

Die Erfindung geht aus von einer Hausgerätevorrichtung mit einem Befestigungsteil nach dem Oberbegriff des Anspruchs 1, von einem Hausgerätelüfterrad nach dem Oberbegriff des Anspruchs 9, von einer Motorwelle nach dem Oberbegriff des Anspruchs 10 und von einem Verfahren zum Befestigen eines Hausgerätelüfterrads nach dem Oberbegriff des Anspruchs 12.

Aus der DE 79 31 467 U1 ist eine Hausgerätevorrichtung zum Befestigen eines Hausgerätelüfterrads eines Gargeräts an einer Motorwelle eines Antriebsmotors bekannt. Die Hausgerätevorrichtung umfasst ein als Kontermutter ausgebildetes Befestigungsteil, das zur formschlüssigen Verbindung der Motorwelle und des mit der Motorwelle verschraubten Hausgerätelüfterrads in axialer Richtung dient. Um einen verbesserten Wärmekontakt zu erreichen, ist der Formschluss durch einen Stoffschluss unterstützt, der durch einen metallisch abbindenden Kleber erzeugt ist. In bekannten Hausgerätevorrichtungen ist die Motorwelle mit einem Linksgewinde ausgestattet, um ein unbeabsichtigtes Lösen des Hausgerätelüfterrads im Betrieb zu verhindern.

Die Aufgabe der Erfindung besteht insbesondere darin, eine gattungsgemäße Hausgerätevorrichtung bereitzustellen, deren Montagefreundlichkeit verbessert ist und die geringe Produktionskosten verursacht. Die Aufgabe wird erfindungsgemäß durch die Merkmale der unabhängigen Patentansprüche 1, 9, 10 und 12 gelöst, während vorteilhafte Ausgestaltungen und Weiterbildungen der Erfindung den Unteransprüchen entnommen werden können.

Die Erfindung geht aus von einer Hausgerätevorrichtung mit einem Befestigungsteil zum Befestigen eines Hausgerätelüfterrads eines Hausgeräts, insbesondere eines Gargeräts, an einer Motorwelle eines Antriebsmotors.

Es wird vorgeschlagen, dass das Befestigungsteil dazu vorgesehen ist, wenigstens in eine axiale Richtung eine zumindest hauptsächlich kraftschlüssige Verbindung mit der Motorwelle zu erzeugen. Dadurch kann auf kostenintensive Formschlusselemente bzw. auf ein aufwendiges Herstellen eines Stoffschlusses verzichtet werden. Durch das Entfallen eines Formschlusses kann ein Verklemmen von Formschlusselementen, beispielsweise von Gewinden, verhindert werden. Dadurch wird eine Montagefreundlichkeit deutlich erhöht und es kann eine zumindest weitgehend automatisierte Montage mit wenig Ausschuss erreicht werden. Letztlich können besonders geringe Produktionskosten bei der Befestigung des Hausgerätelüfterrads erzielt werden.

Die Vorteile der erfindungsgemäßen Lösung kommen insbesondere deshalb im Zusammenhang mit einem Hausgerätelüfterrad eines Gargeräts, und zwar insbesondere mit einem Umluftlüfterrad, zum Tragen, weil solche Lüfterräder stetig und mit vergleichsweise geringem Drehmoment angetrieben werden. Dadurch stehen hohen Anforderungen an eine Temperaturbeständigkeit der Befestigung geringe Anforderungen an eine Drehfestigkeit der Befestigung gegenüber. Prinzipiell wäre es jedoch denkbar, die erfindungsgemäße Lösung auch zur Befestigung anderer Lüfterräder, beispielsweise in einem Kraftfahrzeug, zu nutzen. Unter "vorgesehen" soll in diesem Zusammenhang auch "ausgelegt" und "ausgestattet" verstanden werden. Die erfindungsgemäße Lösung eignet sich sowohl zur Befestigung von Hausgerätelüfterrädern, die als Gussteile ausgebildet sind, als auch zur Befestigung von Hausgerätelüfterrädern, die als Stanz-Biegeblechteile ausgebildet sind. Hausgerätelüfterräder üben unmittelbar eine Hauptfunktion des Hausgeräts aus. Beispiele sind ein Umluftlüfterrad eines Gargeräts, ein Lüfterrad eines Wäschetrockners oder ein Lüfterrad einer Klimaanlage.

In einer Weiterbildung der Erfindung wird vorgeschlagen, dass das Befestigungsteil zum Verpressen mit der Motorwelle vorgesehen ist. Dadurch kann ein Montageaufwand weiter reduziert und zumindest im Wesentlichen auf einen einzigen Aufpressvorgang reduziert werden. Als "Verpressen" soll hier ein durch maschinelle Krafteinwirkung realisiertes, kraftschlüssiges Verbinden bezeichnet werden, das mit einer Deformation eines der Bauteile realisiert wird, wodurch eine Passform erreicht wird. Der Begriff "Verpressen" soll insbesondere die Bedeutungen von "Aufpressen" und "Einpressen" umfassen. Das Befestigungsteil ist insbesondere dann zum Verpressen mit der Motorwelle geeignet, wenn es eine Ausnehmung mit radial nach innen ragenden, blattfederartigen Zungen aufweist, die in axialer Richtung federnd elastisch deformierbar sind und deren freie Enden einen Innenkreis mit einem Innenradius bilden, der kleiner ist als ein Radius der Motorwelle. Ein Verpressen kann erleichtert werden, wenn die Motorwelle ihrerseits an ihrem freien Ende kegelförmig auslaufend ausgebildet ist.

Ist das Befestigungsteil dazu vorgesehen, in einem zylindrischen Bereich der Motorwelle gehalten zu sein, kann auf ein Gewinde oder andere Haltemittel auf der Motorwelle verzichtet werden. Dadurch können Kosteneinsparungspotenziale erschlossen werden.

Wenn das Befestigungsteil dazu vorgesehen ist, eine Klemmkraft mit einer radialen Komponente auf die Motorwelle auszuüben, kann ein sicherer Halt, insbesondere auch an einer glatten und/oder zylinderförmigen Motorwelle, erreicht werden.

Eine demontierbare Hausgerätevorrichtung zum Befestigen des Hausgerätelüfterrads kann erreicht werden, wenn die Hausgerätevorrichtung ein Mittel zum Lösen der Verbindung zwischen dem Hausgerätelüfterrad und der Motorwelle umfasst.

In einer besonders kostengünstigen Weiterbildung der Erfindung wird vorgeschlagen, dass das Befestigungsteil als selbstklemmende Sperrscheibe ausgebildet ist.

Umfasst die Hausgerätevorrichtung ein Anlageelement zum Abstützen des Hausgerätelüfterrads in einer axialen Richtung, ist ein sicherer Halt in axialer Richtung erreichbar, und zwar insbesondere dann, wenn das Befestigungsteil das Hausgerätelüfterrad mit einer dauerhaften Anpresskraft an das Anlageelement presst. Dabei können Fertigungstoleranzen vorteilhaft ausgeglichen werden, wenn das Anlageelement federnd ausgebildet ist bzw. ein federndes Element, beispielsweise eine Wellscheibe, umfasst.

Weist das Befestigungsteil ein in Umfangsrichtung ausgerichtetes Anschlagelement auf, das zu einem Anschlagelement des Hausgerätelüfterrads korrespondiert, kann eine sichere Verbindung zwischen dem Befestigungsteil und dem Hausgerätelüfterrad erreicht werden.

Zudem geht die Erfindung aus von einem Hausgerätelüfterrad, insbesondere eines Gargeräts, mit einer zentralen Ausnehmung zum Einstecken einer Motorwelle eines Antriebsmotors und mit einem Befestigungsbereich.

Es wird vorgeschlagen, dass der Befestigungsbereich dazu vorgesehen ist, vermittelt durch ein Befestigungsteil, wenigstens in eine axiale Richtung eine zumindest hauptsächlich kraftschlüssige Verbindung mit der Motorwelle zu erzeugen. Durch einen Verzicht auf ein Innengewinde des Hausgerätelüfterrads können dann Fertigungskosten eingespart werden.

Zudem geht die Erfindung aus von einer Motorwelle mit einem Befestigungsbereich zum Halten eines Hausgerätelüfterrads eines Hausgeräts, insbesondere eines Gargeräts.

Es wird vorgeschlagen, dass der Befestigungsbereich dazu vorgesehen ist, vermittelt durch ein Befestigungsteil, wenigstens in eine axiale Richtung eine zumindest hauptsächlich kraftschlüssige Verbindung mit dem Hausgerätelüfterrad zu erzeugen. Dies kann insbesondere durch einen flachen, axial ausgerichteten Befestigungsflansch, der zur Anlage des Befestigungsteils vorgesehen ist, erreicht werden.

Ist der Befestigungsbereich der Motorwelle zylindermantelförmig ausgebildet, kann ein Einstellen einer Drehlage des Hausgerätelüfterrads bei der Montage vorteilhaft entfallen, wodurch ein Montagevorgang beschleunigt werden kann.

Ein Aufstecken des Hausgerätelüfterrads und ein Verpressen des Befestigungsteils können vereinfacht werden, wenn die Motorwelle einen konisch auslaufenden Endbereich aufweist.

Ferner geht die Erfindung aus von einem Verfahren zum Befestigen eines Hausgerätelüfterrads an einer Motorwelle eines Hausgeräts, insbesondere eines Gargeräts, wobei in einem ersten Schritt das Hausgerätelüfterrad auf die Motorwelle gesteckt wird.

Es wird vorgeschlagen, dass in einem zweiten Schritt das Befestigungsteil zum Herstellen einer zumindest hauptsächlich kraftschlüssigen Verbindung zwischen der Motorwelle und dem Hausgerätelüfterrad mit der Motorwelle verpresst wird.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: ein Gargerät mit einem Hausgerätelüfterrad,
- Fig. 2: das Hausgerätelüfterrad aus Figur 1 und eine Motorwelle in einer Schnittdarstellung,
- Fig. 3: ein Befestigungsteil zum Befestigen des Hausgerätelüfterrads an der Motorwelle aus Figur 2 in einer Seitenansicht und
- Fig. 4: das Befestigungsteil aus Figur 3 in einer Draufsicht.

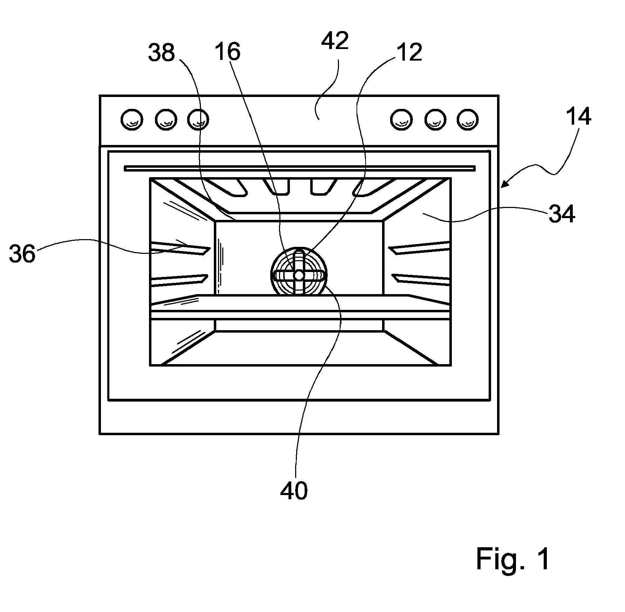

Figur 1 zeigt ein als Haushaltsbackofen mit einer Umluftfunktion ausgebildetes Hausgerät, und zwar ein Gargerät 14. Das Gargerät 14 umfasst einen Garraum 34, der in der einem Bediener zugewandten Richtung durch eine transparente Gargerätetür 36 begrenzt ist und der in der dem Bediener abgewandten Richtung durch ein Luftleitblech 38 begrenzt ist. Im Luftleitblech 38 ist eine zentrale, vergitterte Öffnung 40 angeordnet, durch welche eine Umluftvorrichtung des Gargeräts 14 Wrasen aus dem Garraum 34 ansaugt. Dazu umfasst die Umluftvorrichtung ein Hausgerätelüfterrad 12 bzw. ein Umluftlüfterrad, das an einer horizontal in Richtung des Garraums 34 in einen hinter dem Luftleitblech 38 angeordneten Raum hineinragenden Motorwelle 16 befestigt ist, die ihrerseits Teil eines elektrischen Antriebsmotors 18 der Umluftvorrichtung ist. Das Hausgerätelüfterrad 12 ist über die Motorwelle 16 durch den Antriebsmotor 18 antreibbar. Der Antriebsmotor 18 ist mit einer hier nicht dargestellten Steuereinheit des Gargeräts 14 verbunden und kann über diese abhängig von einem Bedienersignal ein- und ausgeschaltet werden. Der Bediener kann die Steuereinheit und damit die Umluftvorrichtung über ein Bedienfeld 42 des Gargeräts 14 betätigen.

Das Hausgerätelüfterrad 12 bläst den angesaugten Wrasenstrom während des Betriebs mit Hilfe von Schaufeln 44 radial nach außen. Dadurch wird der Wrasenstrom an einem hier nicht explizit dargestellten Umluftheizkörper vorbeigeleitet und erwärmt, bevor er durch Öffnungen, die in einem Randbereich des Luftleitblechs 38 angeordnet sind, zurück in den Garraum 34 geführt ist.

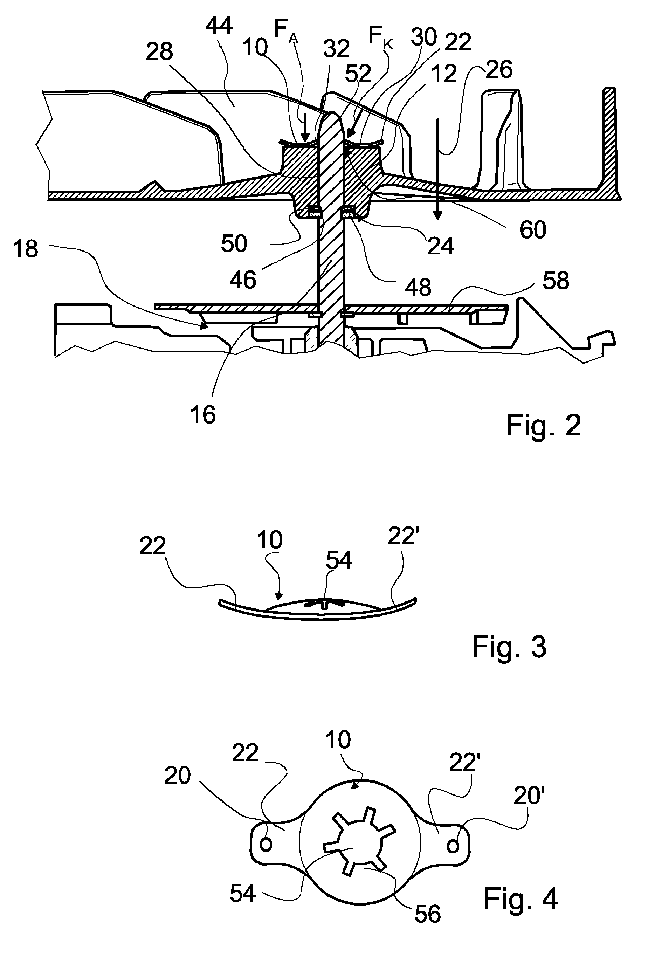

Die Motorwelle 16 weist einen umfänglich verlaufenden Einstich 46 auf, der zur Aufnahme einer E-Scheibe 48 vorgesehen ist, die im montierten Zustand in den Einstich 46 eingreift und dazu transversal zur Längsachse der Motorwelle 16 in den Einstich 46 eingeklipst werden kann (Figur 2). Die E-Scheibe 48 bildet zusammen mit einer auf der E-Scheibe 48 lagernden, federelastischen Wellscheibe 50 ein axial federndes Anlageelement 24 zum Abstützen des Hausgerätelüfterrads 12 in einer axialen Richtung 26.

Nach dem Befestigen des Anlageelements 24 wird in einem ersten Montageschritt das Hausgerätelüfterrad 12 in der Richtung 26 auf die Motorwelle 16 gesteckt, bis es am Anlageelement 24 anschlägt. Ein kegelförmig auslaufender Endbereich 52 der Motorwelle 16 hilft beim Zentrieren des Hausgerätelüfterrads 12, das eine zentrale, kreisförmige Ausnehmung 28 aufweist, deren Innendurchmesser mit dem Durchmesser der Motorwelle 16 übereinstimmt.

In einem zweiten Montageschritt wird ein als selbstklemmende Sperrscheibe ausgebildetes Befestigungsteil 10 in der Richtung 26 mit der Motorwelle 16 verpresst bzw. aufgepresst.

Das Befestigungsteil 10 weist eine mittige, sternförmige Öffnung 54 auf, die von sechs radial nach innen ragenden Laschen 56 begrenzt ist, deren freie Enden in einem Kreis angeordnet sind, dessen Innendurchmesser um etwa 1 - 2 mm kleiner ist als der Durchmesser der Motorwelle 16 (Figur 4). Beim Verpressen des Befestigungsteils 10 mit der Motorwelle 16 werden die Laschen 56 durch die Seitenflächen des kegelförmigen Endbereichs 52 entgegen der Richtung 26 ausgelenkt und liegen anschließend mit einer Klemmkraft F_{K} an der Seitenfläche der Motorwelle 16 an. Die Klemmkraft F_{K} weist eine radiale Komponente auf. Das Befestigungsteil 10 wird auf die Motorwelle 16 gepresst, bis es an einen ringförmigen, ebenen, senkecht zur Motorwelle 16 verlaufenden Befestigungsbereich 30 des Hausgerätelüfterrads 12 zur Anlage kommt und eine Anpresskraft F_{A} in der axialen Richtung 26 auf den Befestigungsbereich 30 ausübt.

Die Anpresskraft F_{A} wird einerseits vom Hausgerätelüfterrad 12 auf dem Anlageelement 24 abgestützt und führt zu einer leichten elastischen Deformation der Wellscheibe 50 und wird andererseits über die Laschen 56 an der Motorwelle 16 abgestützt, wo sie sich mit der Klemmkraft F_{K} überlagert.

Im montierten Zustand des Hausgerätelüfterrads 12 liegen die Laschen 56 in einem zylindermantelförmigen, gewindefreien Befestigungsbereich 32 der Motorwelle 16 an.

Durch die Klemmkraft F_{K} vermittelt das Befestigungsteil 10 über den Befestigungsbereich 30 des Hausgerätelüfterrads 12 und den Befestigungsbereich 32 der Motorwelle 16 in der axialen Richtung 26 eine kraftschlüssige Verbindung 60 zwischen dem Hausgerätelüfterrad 12 und der Motorwelle 16. Eine entgegen der Richtung 26 gerichtete Kraft auf das Hausgerätelüfterrad 12 führt unmittelbar zu einem Verkanten der Laschen 56, die dann wie Widerhaken wirken und die den selbstklemmenden Charakter des Befestigungsteils 10 in dieser Ausgestaltung begründen.

Das Befestigungsteil 10 weist ferner zwei als gegenüberliegende, radial nach außen ragende Laschen ausgebildete Mittel 22, 22' zum Lösen der Verbindung 60 zwischen der Motorwelle 16 und dem Hausgerätelüfterrad 12 auf. Zum Lösen kann ein Kundendienstmitarbeiter mit einem Spezialwerkzeug über Löcher 20, 20' das Befestigungsteil 10 greifen und von der Motorwelle 16 abziehen. Die Mittel 22, 22' sind im montierten Zustand leicht aus der Ebene des Befestigungsbereichs 30 herausgebogen. Dadurch kann der Kundendienstmitarbeiter die Mittel 22, 22' leichter greifen (Figur 3).

Neben dem Hausgerätelüfterrad 12 ist an der Motorwelle 16 im Bereich des Antriebsmotors 18 ein weiteres Lüfterrad 58 angeordnet, das zum Kühlen des Antriebsmotors 18 vorgesehen ist.

Es sind weitere Ausgestaltungen der Erfindung denkbar, in denen das Hausgerätelüfterrad 12 zusätzliche Formschlusselemente aufweist, die an den Mitteln 22, 22' des Befestigungsteils 10 seitlich zur Anlage kommen und einer Drehmitnahme des Hausgerätelüfterrads 12 dienen.

### Bezugszeichen

- 10: Befestigungsteil
- 12: Hausgerätelüfterrad
- 14: Gargerät
- 16: Motorwelle
- 18: Antriebsmotor
- 20: Loch
- 22: Mittel
- 24: Anlageelement
- 26: Richtung
- 28: Ausnehmung
- 30: Befestigungsbereich
- 32: Befestigungsbereich
- 34: Garraum
- 36: Gargerätetür
- 38: Luftleitblech
- 40: Öffnung
- 42: Bedienfeld
- 44: Schaufel
- 46: Einstich
- 48: E-Scheibe
- 50: Wellscheibe
- 52: Endbereich
- 54: Öffnung
- 56: Lasche
- 58: Lüfterrad
- 60: Verbindung
- F_{K}: Klemmkraft
- F_{A}: Anpresskraft

## Patentansprüche

1. Hausgerätevorrichtung mit einem Befestigungsteil (10) zum Befestigen eines Hausgerätelüfterrads (12) eines Hausgeräts, insbesondere eines Gargeräts (14), an einer Motorwelle (16) eines Antriebsmotors (18), **dadurch gekennzeichnet, dass** das Befestigungsteil (10) dazu vorgesehen ist, wenigstens in eine axiale Richtung (26) eine zumindest hauptsächlich kraftschlüssige Verbindung (60) mit der Motorwelle (16) zu erzeugen.

2. Hausgerätevorrichtung nach Anspruch 1, **dadurch gekennzeichnet, dass** das Befestigungsteil (10) zum Verpressen mit der Motorwelle (16) vorgesehen ist.

3. Hausgerätevorrichtung nach einem der vorhergehenden Ansprüche, **dadurch gekennzeichnet, dass** das Befestigungsteil (10) dazu vorgesehen ist, in einem zylindrischen Befestigungsbereich (32) der Motorwelle (16) gehalten zu sein.

4. Hausgerätevorrichtung nach einem der vorhergehenden Ansprüche, **dadurch gekennzeichnet, dass** das Befestigungsteil (10) dazu vorgesehen ist, eine Klemmkraft (F_{K}) mit einer radialen Komponente auf die Motorwelle (16) auszuüben.

5. Hausgerätevorrichtung nach einem der vorhergehenden Ansprüche, **gekennzeichnet durch** ein Mittel (22, 22') zum Lösen der Verbindung (60) zwischen dem Hausgerätelüfterrad (12) und der Motorwelle (16).

6. Hausgerätevorrichtung nach einem der vorhergehenden Ansprüche, **dadurch gekennzeichnet, dass** das Befestigungsteil (10) als selbstklemmende Sperrscheibe ausgebildet ist.

7. Hausgerätevorrichtung nach einem der vorhergehenden Ansprüche, **gekennzeichnet durch** ein Anlageelement (24) zum Abstützen des Hausgerätelüfterrads (12) in der axialen Richtung (26).

8. Hausgerätevorrichtung nach Anspruch 7, **dadurch gekennzeichnet, dass** das Anlageelement (24) federnd ausgebildet ist.

9. Hausgerätelüfterrad (12), insbesondere Umluftlüfterrad eines Gargeräts (14), mit einer zentralen Ausnehmung (28) zum Einstecken einer Motorwelle (16) eines Antriebsmotors (18) und mit einem Befestigungsbereich (30), **dadurch gekennzeichnet, dass** der Befestigungsbereich (30) dazu vorgesehen ist, vermittelt durch ein Befestigungsteil (10) eine wenigstens in eine axiale Richtung (26) zumindest hauptsächlich kraftschlüssige Verbindung (60) mit der Motorwelle (16) zu erzeugen.

10. Motorwelle (16) mit einem Befestigungsbereich (32) zum Halten eines Hausgerätelüfterrads (12) eines Hausgeräts, insbesondere eines Gargeräts (14), **dadurch gekennzeichnet, dass** der Befestigungsbereich (32) dazu vorgesehen ist, vermittelt durch ein Befestigungsteil (10), wenigstens in eine axiale Richtung (26) eine zumindest hauptsächlich kraftschlüssige Verbindung (60) mit dem Hausgerätelüfterrad (12) zu erzeugen.

11. Motorwelle (16) nach Anspruch 10, **dadurch gekennzeichnet, dass** der Befestigungsbereich (32) zylindermantelförmig ausgebildet ist.

12. Verfahren zum Befestigen eines Hausgerätelüfterrads (12) an einer Motorwelle (16) eines Hausgeräts, insbesondere eines Gargeräts (14), wobei in einem ersten Schritt das Hausgerätelüfterrad (12) auf die Motorwelle (16) gesteckt wird, **dadurch gekennzeichnet, dass** in einem zweiten Schritt das Befestigungsteil (10) zum Herstellen einer zumindest hauptsächlich kraftschlüssigen Verbindung (60) zwischen der Motorwelle (16) und dem Hausgerätelüfterrad (12) mit der Motorwelle (16) verpresst wird.
